(19) Europäisches Patentamt
European Patent Office
Office européen des brevets

(11) Veröffentlichungsnummer: **0 037 111 B1**

(12) # EUROPÄISCHE PATENTSCHRIFT

(45) Veröffentlichungstag der Patentschrift: **06.06.84**

(51) Int. Cl.³: **H 04 M 19/02**

(21) Anmeldenummer: **81102362.1**

(22) Anmeldetag: **28.03.81**

(54) **Schaltungsanordnung zur Erzeugung von Rufsignalen für Fernmeldeleitungen.**

(30) Priorität: **31.03.80 US 135755**

(43) Veröffentlichungstag der Anmeldung: **07.10.81 Patentblatt 81/40**

(45) Bekanntmachung des Hinweises auf die Patenterteilung: **06.06.84 Patentblatt 84/23**

(84) Benannte Vertragsstaaten: **AT CH DE FR GB IT LI NL**

(56) Entgegenhaltungen:
**DE - A - 2 717 701**
**DE - A - 2 720 081**
**DE - A - 2 806 198**
**DE - A - 2 808 737**
**DE - A - 2 901 739**
**US - A - 3 087 021**
**US - A - 4 071 709**
**US - A - 4 192 007**

(73) Patentinhaber: **International Standard Electric Corporation, 320 Park Avenue, New York New York 10022 (US)**

(72) Erfinder: **Chea, Jr., Ramon C.W., 65 William Henry Drive, Monroe, Connecticut (US)**

(74) Vertreter: **Graf, Georg Hugo, Dipl.-Ing. et al, c/o Standard Elektrik Lorenz AG Patent- und Lizenzwesen Postfach 300 929 Kurze Strasse 8, D-7000 Stuttgart 30 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 037 111 B1

**Beschreibung**

Die Erfindung betrifft eine Schaltungsanordnung zur Erzeugung von Rufsignalen für Fernmeldeleitungen, wie es im Oberbegriff des Patentanspruchs 1 angegeben ist.

In Fernsprechvermittlungsanlagen werden üblicherweise die Rufsignale derart geliefert, daß aus einer Rufschaltung jeweils gleichzeitig nur eine zu rufende Teilnehmerleitung mit Rufsignalen versorgt werden kann. Daher muß neben der den Rufstrom erzeugenden Rufschaltung eine Rufabschalteschaltung vorgesehen werden, die nach dem Melden des gerufenen Teilnehmers die Abschaltung der Rufsignale von dieser Teilnehmerleitung bewirkt und die es daher ermöglicht, die gleiche Rufschaltung nacheinander an viele zu rufende Teilnehmerleitungen anzuschließen. Ein Rufsignal besteht meist aus einer kurzen Phase Rufstrom mit einer anschließenden, längeren Rufpause und wiederholt sich zyklisch im sogenannten Rufzyklus. Wenn ein Sofortruf gegeben werden soll, um nicht nach Anschaltung der Rufschaltung an die Fernmeldeleitung im ungünstigen Fall fast die gesamte Rufpause bis zur ersten zyklischen Rufstromphase abwarten zu müssen, dann muß jede Rufschaltung mit zwei Rufsignalgeneratoren ausgerüstet sein. Der eine Rufsignalgenerator muß dabei ständig arbeiten, während der andere in Phasen arbeitet. Eine derartige Rufschaltung weist eine Steuerung auf, die die zu rufende Teilnehmerleitung während einer bestimmten Zeitspanne von beispielsweise 300 ms mit dem ständig arbeitenden Rufsignalgenerator und anschließend mit dem in Phasen arbeitenden Rufsignalgenerator verbindet. Diese bekannten Rufschaltungen erfordern für mehrfrequente Rufsignale oder für Rufsignale unterschiedlicher Frequenz entweder verschiedene oder solche Rufstromquellen, die jeden Rufstromtyp zur Verfügung stellen können. In diesem Fall müssen die verschiedenen Rufsignale über Leitungsbündel übertragen werden, oder es müssen mehrere Relais oder Schalter für jede Rufschaltung aufgewendet werden. Nachfolgend werden in Übereinstimmung mit der Ursprungsanmeldung zum besseren Verständnis der erwähnten üblichen Technik bzw. des Aufbaus des gewählten Ausführungsbeispiels Hinweise auf andere Schutzrechte gegeben.

Bekannte Rufschaltungen sind beispielsweise in den US-Patentschriften 3 767 857, 3 678 208, 4 075 430, 3 005 053, 3 085 133, 3 118 019 und 4 161 633 beschrieben. Die US-Patentschrift 3 767 857 bezieht sich auf Rufstromschaltungen für Fernsprechanlagen, die einen Sofortruf verteilen. Die US-Patentschrift 3 678 208 befaßt sich mit der Bereitstellung eines Sofortrufs unter Verwendung von Verbindungssätzen, die verschiedenen Zeitlagen des Rufzyklus zugeordnet sind.

Die US-Patentschrift 4 075 430 die der DE-OS 2 720 081 entspricht, betrifft die Leitungssignalisierung über einen gemeinsamen Sammelkanal für Fernsprechanlagen. In dieser Patentschrift wird eine Schaltungsanordnung beschrieben, wie sie im Oberbegriff des Patentanspruchs 1 dargelegt ist.

Die US-Patentschrift 3 005 053 befaßt sich mit einem Fernsprechsignalisierungssystem, das verschiedene Signalfrequenzen in verschiedenen Zeitlagen überträgt. Die US-Patentschrift 3 085 133 bezieht sich auf eine automatisch gesteuerte Rufsignalversorgung, wobei der Rufstrom unmittelbar nach Durchschaltung der Verbindung, danach aber in Übereinstimmung mit dem üblichen Rufzyklus zur Verfügung gestellt wird. Die US-Patentschrift 3 118 019 betrifft die Verbindung einer Rufstromquelle mit einem gewünschten Fernsprechapparat über ein Paar in Reihe geschalteter Gatter, die beide in Phase arbeiten müssen, damit der Rufstrom den Fernsprechapparat erreichen kann. Teilnehmeranschlußschaltungen des Typs, wie er in Verbindung mit der vorliegenden Erfindung benutzt werden kann und der programmierbare Signalgeneratoren enthält, die Wechselstrom- und Gleichstromsignalspannungen erzeugen können, sind beispielsweise in der US-Patentschrift 4 161 633 beschrieben worden. Dort sind auch Einzelheiten der programmierbaren Signalerzeugung in einer digitalen Teilnehmeranschlußschaltung angeführt. Digitale Fernsprechkoppelnetze des Typs, wie er für die vorliegende Erfindung besonders vorteilhaft benutzt werden kann, sind im einzelnen in der DE-OS 2 909 762 vorgeschlagen worden.

Ferner ist durch die US-Patentschrift 4 192 007 eine Schaltungsanordnung für einen programmierbaren Rufgenerator bekannt, bei der in Abhängigkeit vom jeweiligen Zustand der Fernmeldeleitungen ein Rufabschaltesignal oder ein Rufanschaltesignal als leitungsindividuelles Rufüberwachungssignal erzeugt wird.

Die Aufgabe der vorliegenden Erfindung besteht darin, eine einfache Rufsignalerzeugung, insbesondere für Fernsprechsysteme, zu schaffen, die die Bereitstellung unterschiedlicher Rufsignale ermöglicht.

Die Lösung dieser Aufgabe wird mit den im Anspruch 1 gekennzeichneten Merkmalen erreicht.

In den Unteransprüchen sind vorteilhafte Weiterbildungen der Erfindung angegeben.

Die Erfindung wird nun anhand eines Ausführungsbeispieles näher erläutert. Es zeigt

Fig. 1 eine erfindungsgemäße Schaltungsanordnung zur Erzeugung von Rufsignalen,

Fig. 2 ein Schaltbild aus Funktionsblöcken für die in Fig. 1 dargestellte Rufschaltung,

Fig. 3 eine Schaltungsanordnung eines Rufsignalgenerators,

Fig. 4 eine schematische Schaltungsanordnung einer bei der Erfindung benutzten Entladungsschaltung,

Fig. 5a bis 5k Schaubilder der an verschiedenen Stellen der Schaltungsanordnung auftretenden Spannungen in Abhängigkeit von der Zeit,

Fig. 6 ein Blockschaltbild einer bei der Erfindung benutzten Rufüberwachungsschaltung,

Fig. 7 eine näher ausgeführte Schaltungsanordnung für die Rufüberwachungsschaltung nach Fig. 6,

Fig. 8 eine Schaltungsanordnung für die für die Rufsignalanordnung vorgesehene logische Steuerung,

Fig. 9 eine Schaltungsanordnung für eine bei der Erfindung benutzte Zeitschaltung,

Fig. 10 ein Blockschaltbild für eine bei der Erfindung verwendete Rufsignalreferenzspannungsquelle,

Fig. 11a bis 11e Schaubilder der an verschiedenen Stellen einer Rufsignalreferenzspannungsquelle nach Fig. 10 auftretenden Spannungen in Abhängigkeit von der Zeit,

Fig. 12 eine Schaltungsanordnung für einen bei der Erfindung benutzten Rufoszillator,

Fig. 13 eine bei der Erfindung benutzte Doppelweggleichrichterschaltung, und

Fig. 14 eine Schaltungsanordnung für einen bei der Erfindung benutzten Gleichspannungsgenerator.

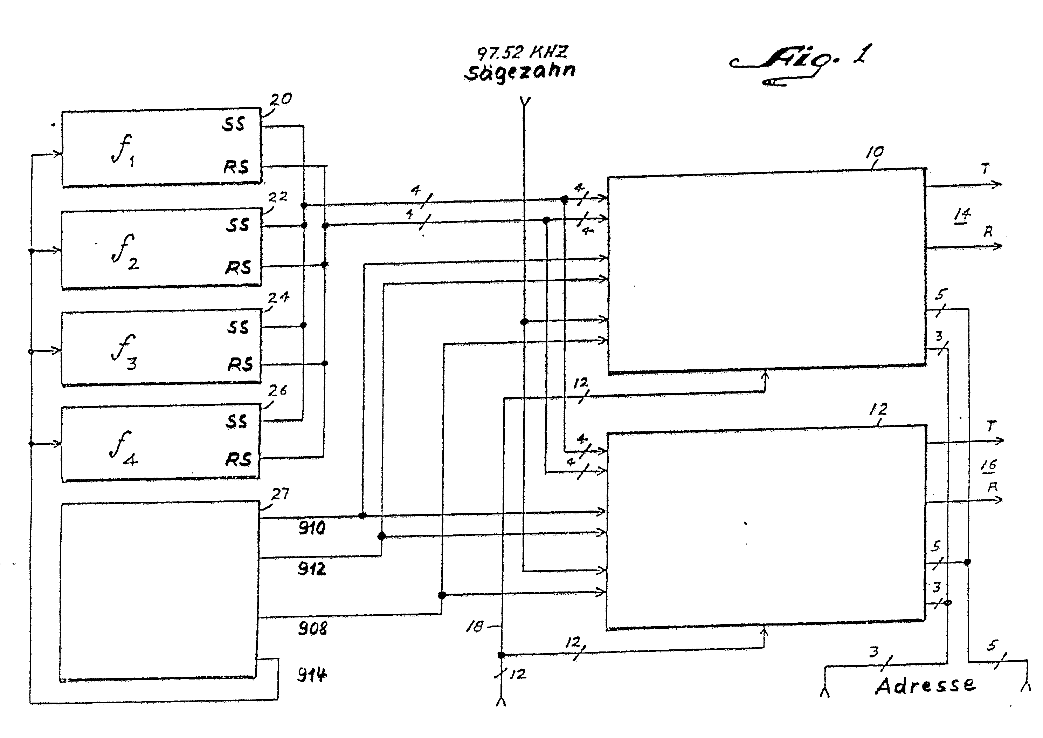

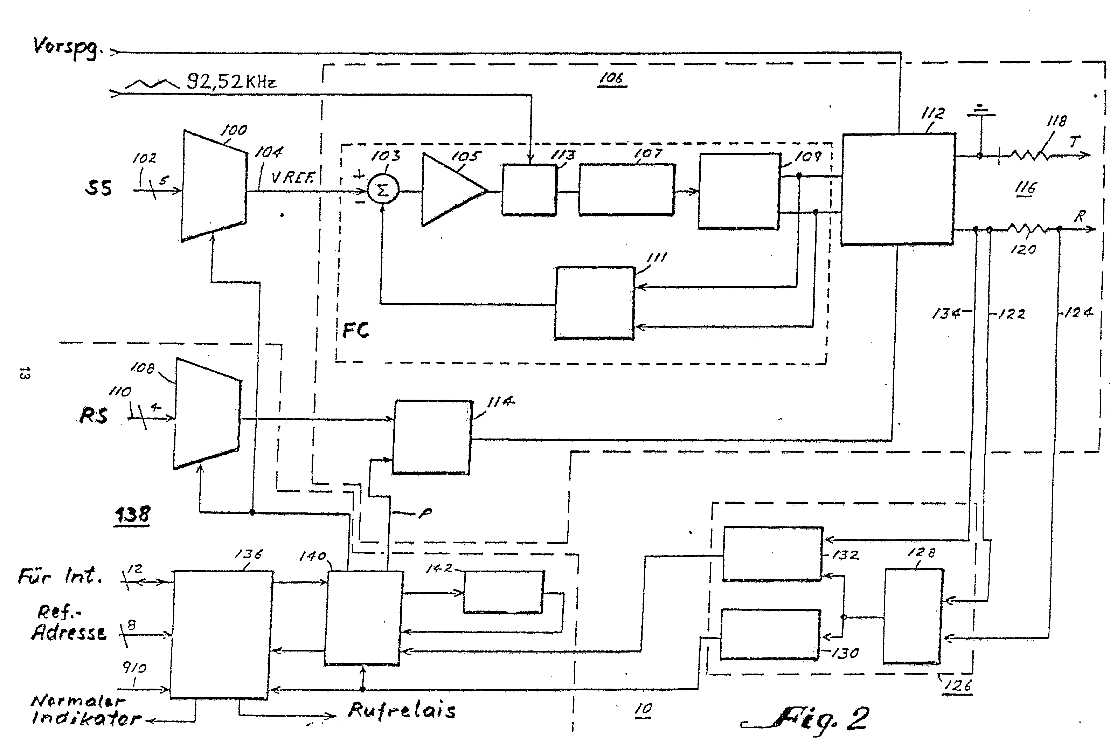

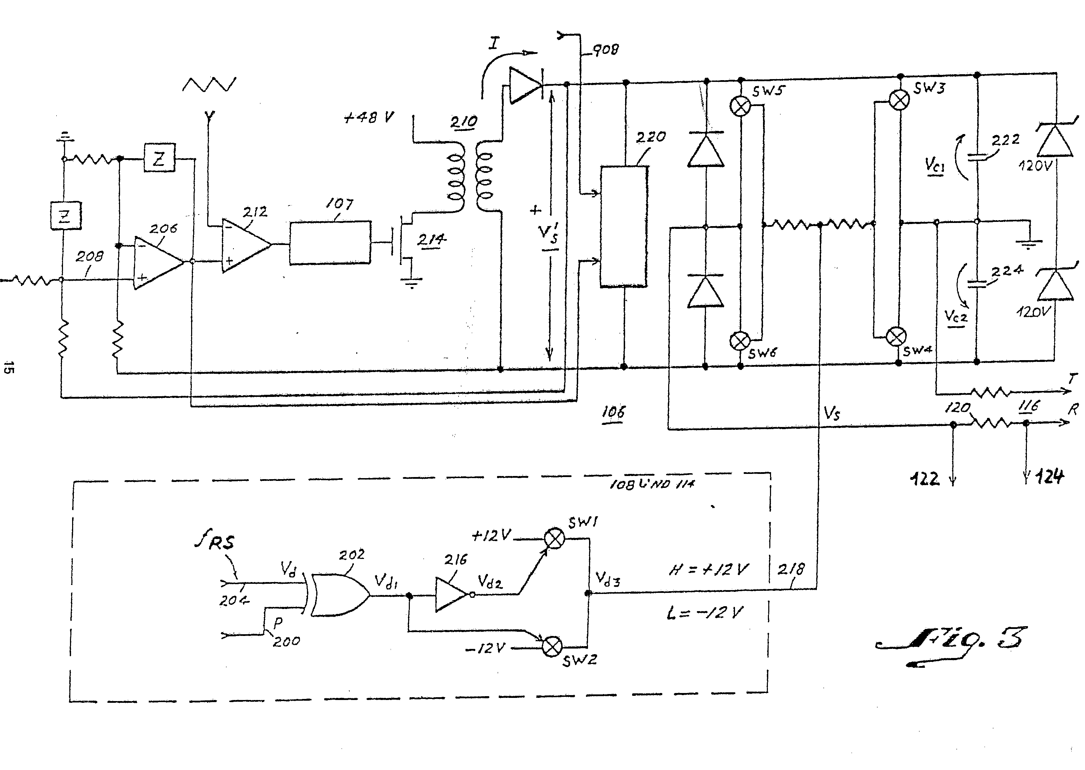

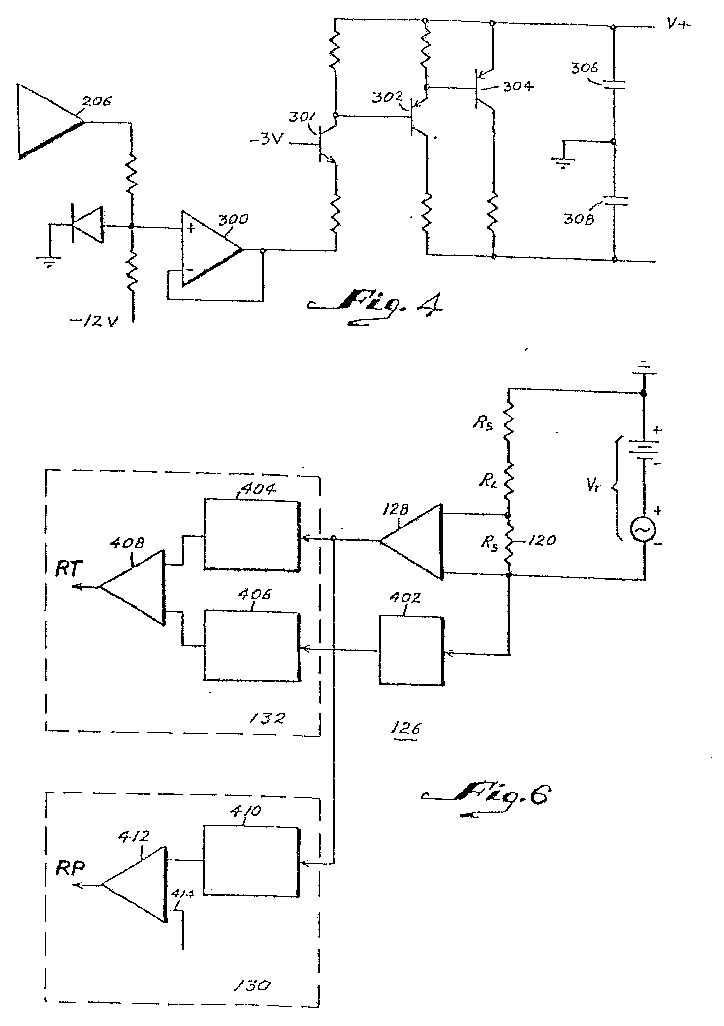

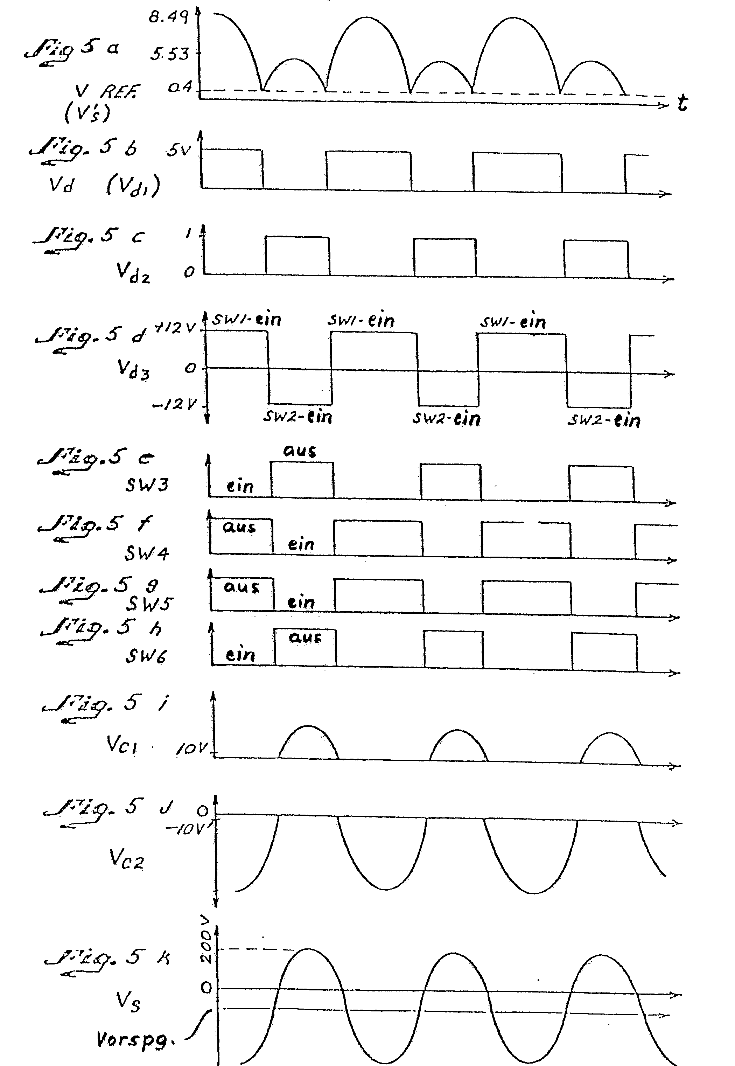

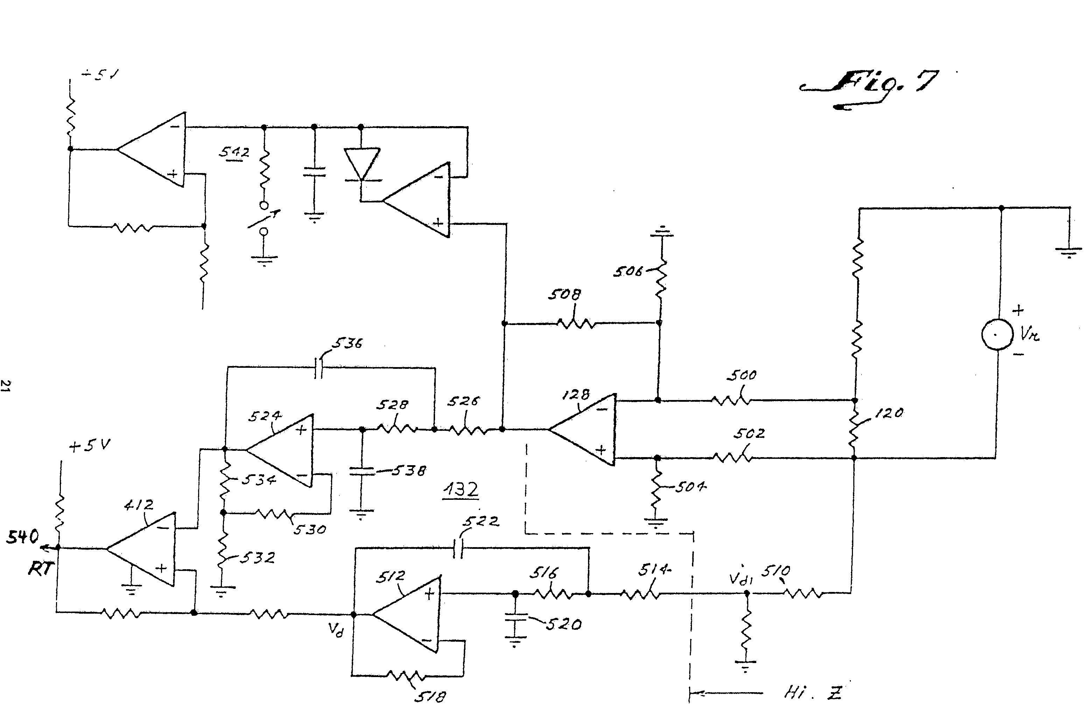

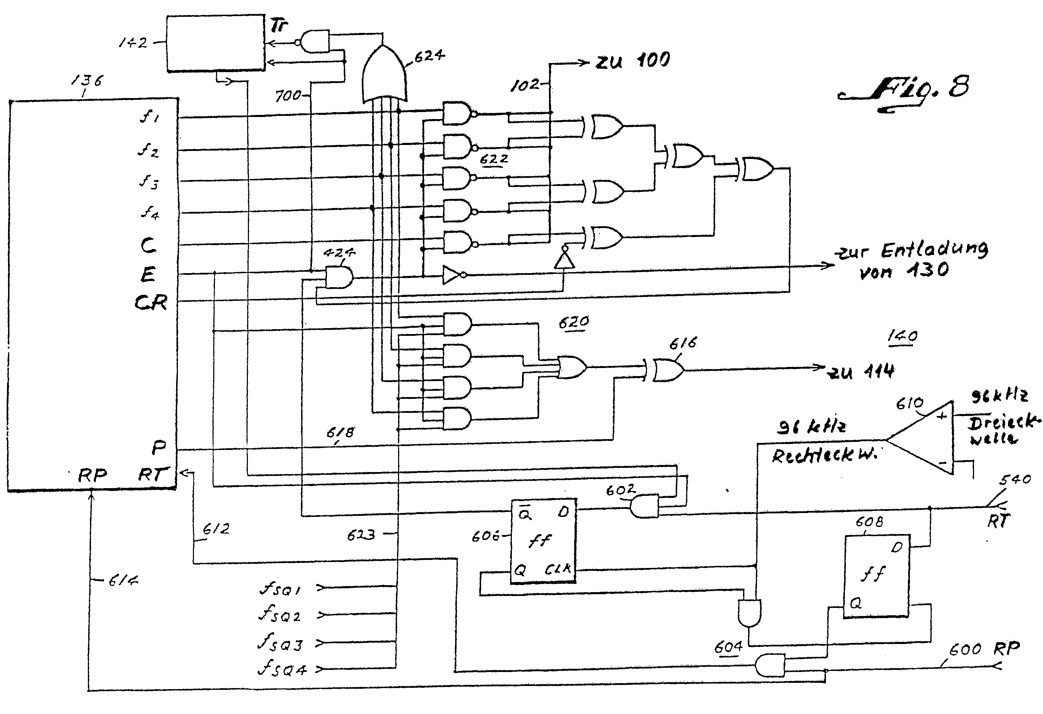

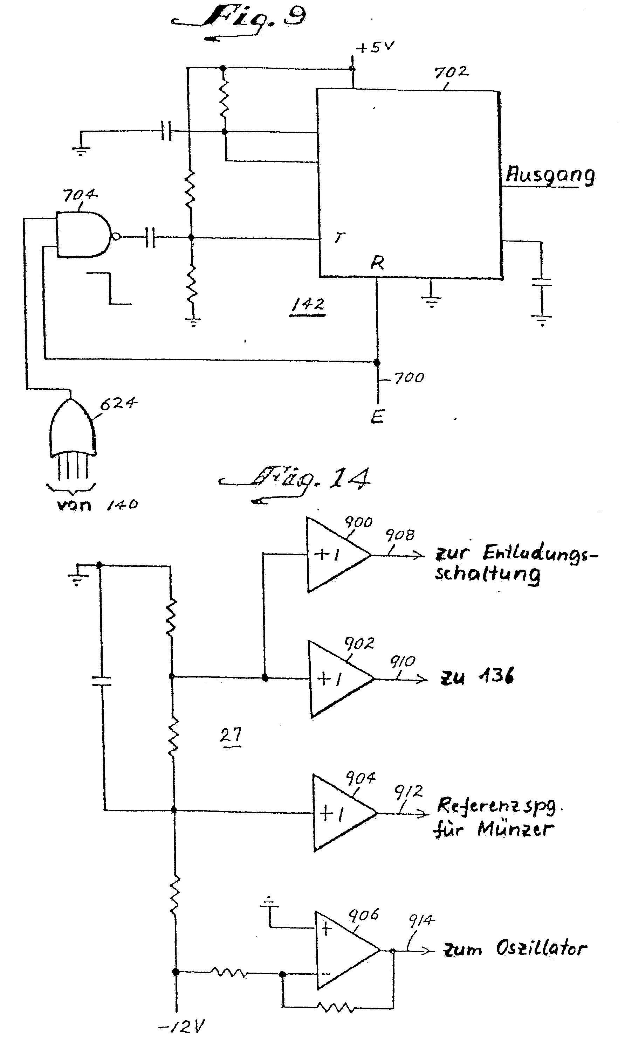

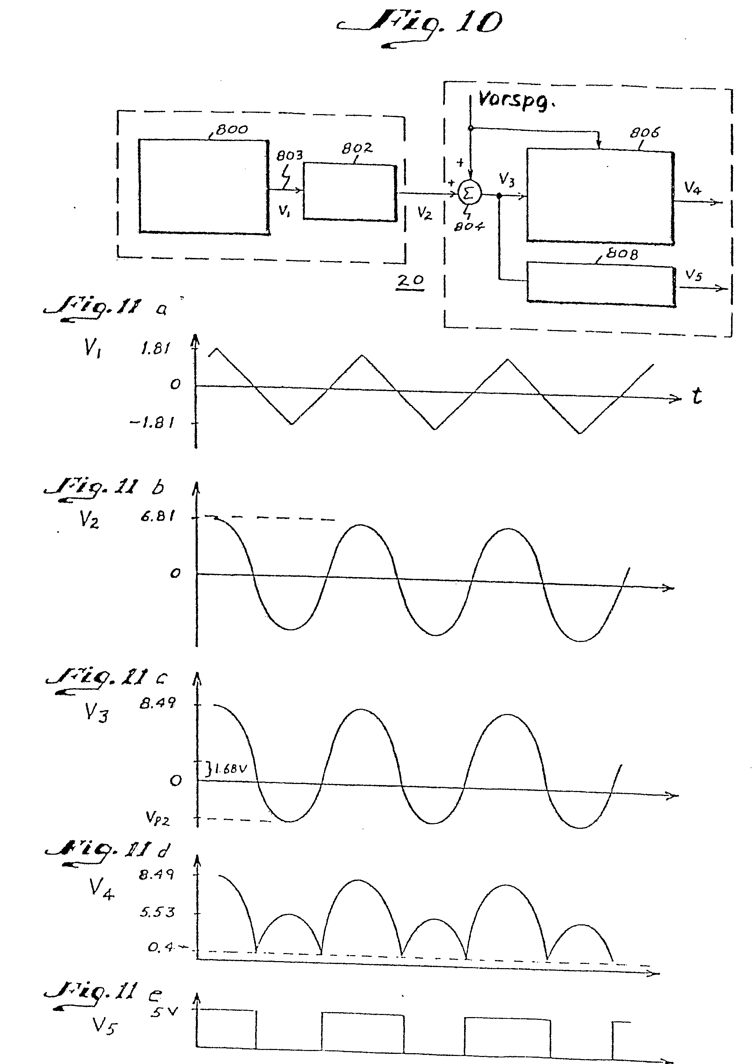

In Fig. 1 sind die Verbindungen zweier Rufschaltungen 10 und 12 gemäß der Erfindung gezeigt. Sie arbeiten nach dem Zeitvielfachverfahren in der Weise, daß sie jeweils mehrere Teilnehmerleitungen versorgen. Eine solche nach dem Zeitvielfachverfahren arbeitende Schaltungsanordnung ist Gegenstand der eingangs genannten, vorgeschlagenen Schaltungsanordnung. Die vorliegende Erfindung befaßt sich mit Einzelheiten der Rufschaltung 10, die identisch mit der Rufschaltung 12 ist. Die Fig. 1 dient zusammen mit den Fig. 10 und 13 dazu, die Randschaltungen zu diesen Rufschaltungen näher zu zeigen. Die Rufschaltungen 10 und 12 arbeiten als Pufferverstärker, die die Niedrigpegelsignale, die von mehreren Wechselstromsignalquellen und einer Gleichstromsignalquelle herkommen, in Leistungssignale höherer Spannung umsetzen, die für den zum Fernsprechapparat übertragenen Rufstrom erforderlich sind. Bei einer bevorzugten Ausführungsform ist jede Rufschaltung 10 bzw. 12 so ausgebildet, daß sie eine Gruppe von 30 Teilnehmerleitungen über einen gemeinsamen Rufsignalbus T, R versorgen kann. Die Rufschaltungen 10 und 12 sind dabei über die Adern 14 bzw. 16 mit den Leitungsgruppen verbunden. Jede Rufschaltung 10 bzw. 12 gibt beispielsweise Festspannungen mit einer bis vier Frequenzen ab, die einer positiven oder negativen Gleichspannung überlagert sind. Diese Gleichspannung ist mit Hilfe eines externen Steuersignals auswählbar, das von einem programmgesteuerten Prozessor oder Mikroprozessor über den Steuerbus 18 den Rufschaltungen 10 und 12 zugeführt wird. Zum Verständnis der vorliegenden Erfindung genügt es zu erwähnen, daß das Steuersignal auf dem Steuerbus 18 ein logisches Signal ist und daß die besondere Programmierung des Prozessors an sich nicht Gegenstand der vorliegenden Erfindung ist. Es sei ebenfalls darauf hingewiesen, daß die Rufschaltung der vorliegenden Erfindung für Signale sorgt, die auch für andere Zwecke als für den Ruf von Fernsprechapparaten nützlich sind. Beispielsweise kann die Erfindung auch für die Ableitung von positiven oder negativen Gleichspannungen für die Münzfernsprechersteuerung herangezogen werden.

Jede Rufsignalreferenzspannungsquelle 20, 22, 24 und 26 erzeugt ein bestimmtes Wechselstromsignal mit einer besonderen Frequenz, das jeweils an einem Ausgangspaar auftritt. An dem einen Ausgang SS tritt ein einer Gleichspannung überlagertes gleichgerichtetes Sinussignal auf, während am anderen Ausgang RS ein Rechtecksignal ansteht. Die Ausgangssignale der Rufsignalreferenzspannungsquellen sind in den Spannungsnullpunkten synchronisiert. Die gleichgerichteten Sinussignale stellen den Rufschaltungen 10 und 12 Referenzspannungen zur Verfügung. Die Rechtecksignale werden in Verbindung mit Kommutierungsschaltern, die in der Endstufe der Rufschaltungen benutzt werden, verwendet. Ein Gleichspannungsgenerator 27 erzeugt Gleichspannungen, von denen eine als Vorspannung den Rufsignalreferenzspannungsquellen über die Ader 914 zugeführt wird.

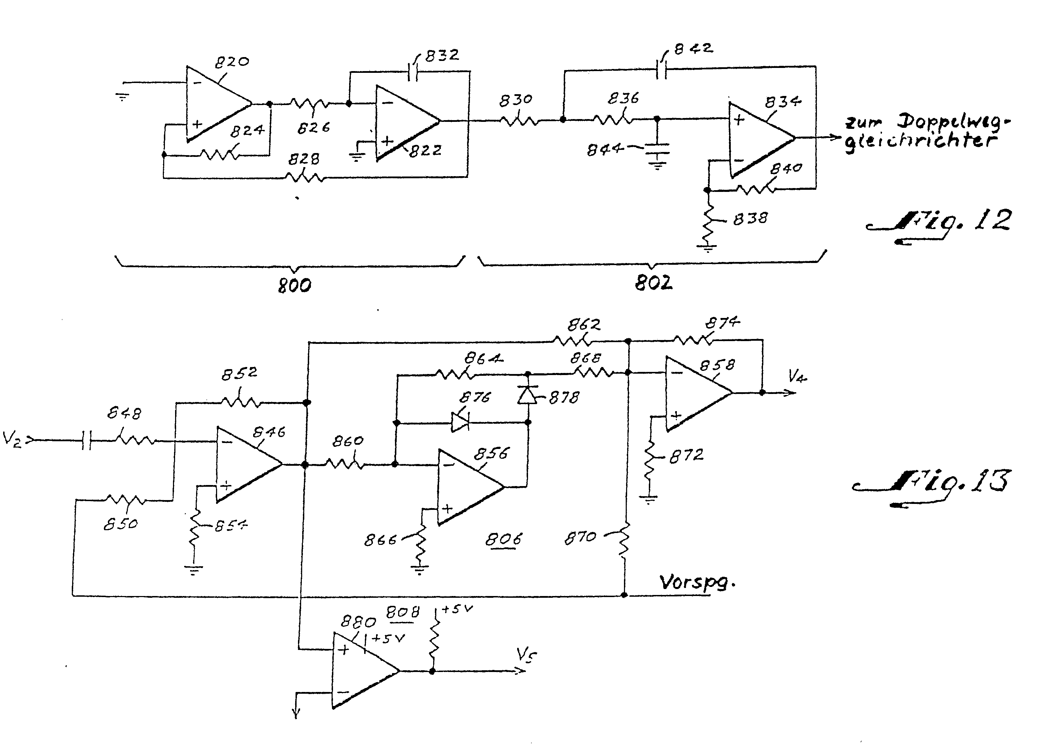

In Fig. 2 ist die Rufschaltung 10 im Blockschema dargestellt. Ein analoger Multiplexer 100 wählt, vom Prozessor gesteuert, ein auf einer der vier Leitungen von den Rufsignalreferenzspannungsquellen ankommendes Sinussignal aus. Die vier Leitungen sind noch um eine Gleichspannungsleitung ergänzt, die mit 102 bezeichnet ist. Am Ausgang 104 des Multiplexers 100 tritt ein Referenzsignal auf, das einem Rufsignalgenerator 106 zugeführt wird, der als rückgekoppelter Gleichspannungsumsetzer arbeitet. Der Rufsignalgenerator 106 enthält eine Addierschaltung 103, einen Verstärker 105, einen Pulsbreitenmodulator 113, einen Impulsbegrenzer 107, einen Gleichspannungsumsetzer 109, ein Ausgleichsdämpfungsglied 111 und einen Kommutierungsschalter 112. Der Rufsignalgenerator 106 wird im einzelnen in Verbindung mit Fig. 3 beschrieben. Ein digitaler Multiplexer 108 wählt einen entsprechenden Rechtecksignalausgang der Rufsignalreferenzspannungsquellen auf einer der vier, mit 110 bezeichneten Eingangsleitungen aus, wobei auch dieser Multiplexer vom Prozessor gesteuert wird. Das ausgewählte Rechtecksignal wird über einen Treibverstärker 114 dem Kommutierungsschalter 112 des Rufsignalgenerators 106 zugeführt. Das dem Kommutierungsschalter 112 zugeführte Signal ist ein verstärktes Referenzsignal, welches ausreichende Leistung zur Bereitstellung des Rufstromes aufweist. Der Rufstrom gelangt vom Ausgang des Kommutierungsschalters 112 über den Rufbus T, R zu den Sprechadern. Eine typische Teilnehmerleitungsverbindung ist mit 116 bezeichnet. Das Ausgangssignal am Kommutierungsschalter 112 ist ein Sinussignal, das aus einem gleichgerichteten Signal mittels der synchronisierten Kommutation der Schalter gewonnen wird, wie noch später näher erläutert wird. Widerstände 118 und 120 arbeiten als Stromsensoren und dienen gleichzeitig zur Strombegrenzung und zum Überspannungsschutz. Der Treiberverstärker 114 dient zur Verstärkung des an seinem Eingang vorhandenen Niedrigpegelsignals; er liefert ein Signal mit höherem Pegel an die Schalter 112.

Das Überwachungssteuersignal auf den Adern 122 und 124 wird an dem in der Teilnehmerleitungsschleife liegenden Widerstand 120 abgenommen und einer Pufferstufe 128 zugeführt, die Teil einer Rufüberwachungsschaltung 126 ist. Dieses am Widerstand 120 abgegriffene Signal kann ausschließlich aus einer Wechselspannung oder aus einer Wechselspannung und einer Gleichspannung bestehen. Die das Abheben des Handapparats kennzeichnenden Signale werden dadurch erzeugt, daß die Wechselspannung ausgefiltert wird und daß die übrigbleibende Gleichspannung mit einer Referenzgleichspannung verglichen wird, die unmittelbar von der Signalquelle abgeleitet wird. Dies erfolgt mittels der Rufüberwachungsschaltung 126, die als Brückenschaltung mit hoher Genauigkeit und hoher Empfindlichkeit gegen Spannungsänderungen der Spannungsquelle ausgebildet ist. Ein Rufanwesenheitsdetektor 130 ist eingangsseitig mit dem Ausgang der Pufferstufe 128 verbunden und erkennt den Rufstrom in der Teilnehmerleitungsschleife, dadurch, daß das Ausgangssignal der Pufferstufe 128 einem Spitzenwertdetektor zugeleitet wird. Das Ausgangssignal dieses Spitzenwertdetektors wird mit einem Referenzsignal verglichen, das den Schwellwert für einen einen positiven Strom kennzeichnenden Zustand bildet. Ein Rufbeantwortungsdetektor 132 ist eingangsseitig mit einer vom Ausgang der Pufferstufe 128 verbunden und erkennt die Rufabschaltung. Das Rufanwesenheitssignal und das Rufabschaltesignal werden dem Prozessor über eine Anpassungsschaltung 136 zugeleitet, die die Anpassung zwischen dem Prozessor und der Rufschaltung besorgt und die Teil einer Rufsteuerschaltung 138 ist. Eine Steuerlogikschaltung 140 prüft die Vollständigkeit der Datenbefehle, die vom Prozessor über die Anpassungsschaltung 136 eintreffen, und erregt den Rufsignalgenerator 106 auf den Empfang eines eine positive Polarität kennzeichnenden Signals P hin. Eine zur Sicherheit dienende Zeitschaltung begrenzt die Erregung auf 2,5 Sekunden, um die Rufschaltung vor Zerstörung zu schützen. Diese Zerstörung könnte sich sonst aus einem verlängerten Rufintervall ergeben, das beispielsweise durch fehlerhafte Daten verursacht wird.

In Fig. 3 ist eine ausführliche schematische Schaltungsanordnung des Rufsignalgenerators 106 dargestellt. Um ein Rufsignal durch Erregung des Rufsignalgenerators 106 zu erzeugen, sendet der Prozessor einen Befehl über die Anpassungsschaltung 136 (Fig. 2), die Steuerlogikschaltung 140 und eine Leitung 200 zum digitalen Multiplexer 108 (siehe Fig. 3 links unten). Dieser Befehl tritt in Form eines Polaritätsbits auf, das die Gleichspannungspolarität angibt und eine Frequenz auswählt. Eine positive Polarität auf der Leitung 200 erregt den Rufsignalgenerator 106. Eine negative Polarität verhindert, daß dieser erregt wird. Auf einer Eingangsleitung 204 einer NOR-Schaltung 202 im digitalen Multiplexer 108 tritt ein Rechtecksignal auf, das von einem Ausgang einer Rufsignalreferenzspannungsquelle stammt. An dem anderen Eingang 200 dieser NOR-Schaltung tritt das Polaritätsbit P auf. Die Rechtecksignale Vd auf der Leitung 204 sind in Fig. 5b wiedergegeben. Die Ausgangsspannung Vref des analogen Multiplexers 100 ist in Fig. 5a wiedergegeben und wird über eine Leitung 208 einem Fehlerverstärker 206 zugeführt. Dem anderen Eingang des Fehlerverstärkers 206 wird ein Rückkopplungssignal vom Ausgang eines kleinen Impulstransformators 210 zugeleitet, der einen Ferritkern hat und als Gleichspannungsumsetzer arbeitet. Eine Sägezahnspannung mit einer Frequenz von 97,52 kHz wird dem einen Eingang eines Komparators 212 zugeleitet, dessen anderer Eingang mit dem Ausgang über den Impulsbegrenzer 107 an das Gate eines Feldeffekttransistors 214 angeschlossen ist. Dieser Transistor dient zur Verstärkung vor der Gleichspannungsumsetzung mittels des Transformators 210 in die Spannung $v'_s$.

Die Ausgangsspanung der NOR-Schaltung 202 ist, wie in Fig. 5b gezeigt, $Vd_1$, wenn eine logische 0 auf der Leitung 200 auftritt, und der Schalter SW2 ist eingeschaltet. Der Wert $Vd_1$ erscheint auch, wenn eine logische 1 vorhanden ist. Der Schalter SW2 ist dann auf »Aus« geschaltet. Ein in Fig. 5c gezeigtes Signal $Vd_2$ tritt am Ausgang eines Inverters 216 auf, wenn auf der Leitung 200 eine logische 0 auftritt, wobei der Schalter SW1 dann eingeschaltet ist. Wenn eine logische 1 vorhanden ist, ist der Schalter SW1 abgeschaltet. An den Ausgängen der Schalter SW1 und SW2 tritt eine in Fig. 5d gezeigte Spannung $Vd_3$ auf, die ein Rechtecksignal mit einem positiven Potential von +12 V und einem negativen Potential von −12 V ist.

Die folgende Tabelle gibt die verschiedenen Positionen der Kommutationsschalter SW1, SW2, SW3, SW4, SW5 und SW6 in der Ausgangsstufe 112 in Beziehung zu den Spannungen $Vd_1$, $Vd_2$ und $Vd_3$ wieder:

| Spannung | Logischer Zustand des Polaritätsbit | Schalter | Schalterzustand |
|---|---|---|---|
| $Vd_2$ | 0 | SW1 | Ein |
| $Vd_2$ | 1 | SW1 | Aus |
| $Vd_1$ | 0 | SW2 | Ein |
| $Vd_1$ | 1 | SW2 | Aus |

| $Vd_3$ | SW3 | SW4 | SW5 | SW6 |
|---|---|---|---|---|
| +12 V | Ein | Aus | Aus | Ein |
| −12 V | Aus | Ein | Ein | Aus |

Die Spannung $Vd_3$ auf der Leitung 218 wird den Kommutierungsschaltern SW3 bis SW5 zugeführt, um den Ausgang einer Entladeschaltung 220 zu schalten, die in Fig. 4 ausführlich dargestellt ist. Das erzeugte Rufsignal wird den Sprechadern über die Leitung 116 zugeführt. Ein Überwachungssignal wird am Widerstand 120 abgenommen.

Die Fig. 5e bis 5h geben Spannungen wieder, die die Schaltvorgänge erläutern, und zwar an den Schaltern SW3, SW4, SW5 und SW6 in Abhängigkeit von der zugeführten Steuerspannung $Vd_3$. Die Fig. 5i stellt die Spannung $vc_1$ am Kondensator 222 dar, während die Fig. 5j die Spannung $vc_2$ am Kondensator 224 wiedergibt. Die Fig. 5k illustriert das Ausgangsrufsignal auf der Leitung 116; das Ausgangsrufsignal setzt sich aus den Spannungen $vc_1$ und $vc_2$ zusammen und hat einen Spitzenwert von etwa 200 V.

Der in der Teilnehmerleitung fließende Strom wird durch die Rufüberwachungsschaltung 126 (Fig. 2) erkannt. Die Erkennung des Leitungszustands, bei dem der Handapparat abgenommen ist, führt zu einem entsprechenden Zustandssignal, das dem Prozessor zugeführt werden muß und führt zur Auslösung der Rufabschaltung. Die Rufabschaltung wird dadurch eingeleitet, daß die Spannung Vref auf den Wert Null geändert wird. Wenn der Strom im Widerstand 120 abgesunken ist, was durch die Rufüberwachungsschaltung 126 festgestellt wird (dies wird im einzelnen in Verbindung mit den Fig. 6 und 7 beschrieben), wird ein Prozessorbefehl erhalten, der den Abfall des Rufrelais in der Teilnehmerschaltung bewirkt, wobei die Abschaltung bei stromlosen Kontakten erfolgt. Das gleiche Abschalteverfahren wird am Ende jedes Rufintervalls durchgeführt. Die Rufkadenz, bei der jeweils innerhalb eines bestimmten Zeitabschnitts ein Rufsignalimpuls auftritt, kann durch das Prozessorprogramm oder durch irgendwelche Befehle anderen Ursprungs dadurch gelenkt werden, daß der Rufsignalgenerator 106 in bestimmten Intervallen ein- und ausgeschaltet wird.

In Fig. 4 ist eine Schaltungsanordnung für die Entladungsschaltung 220 angegeben. Der Ausgang des Fehlerverstärkers 206 ist mit einem Eingang eines Operationsverstärkers 300 verbunden, der die gesamte Entladungsleistung zwischen den Transistoren 302 und 304 verteilt. Ein Transistor 301 hat eine Vorspannung von −3 V, und sein Kollektor ist mit der Basis des Transistors 302 verbunden. Die verstärkte Ausgangsspannung V wird über Kondensatoren 306 und 308 entladen, um eine aperiodische Entladeschwingung zu erzielen. Der Betrag des Entladestroms ist proportional zu dem vom Verstärker 206 kommenden Fehlersignal.

In Fig. 6 ist ein Blockschaltbild einer Rufüberwachungsschaltung 126 gezeigt. Die Rufspannung und eine dem Rufstrom proportionale Spannung werden an dem Widerstand 120 abgenommen und einem Rufbeantwortungsdetektor 132 über ein Dämpfungsglied 402 und eine Pufferstufe 128 zugeführt. Die Ausgangsspannung der Pufferstufe 128 und des Dämpfungsglieds 402 durchlaufen jeweils ein Tiefpaßfilter 404 bzw. 406 und gelangen dann zu einem Komparator 408, der an seinem Ausgang ein logisches Rufabschaltesignal RT abgibt. Im wesentlichen wird das Rufabschaltesignal RT dadurch erhalten, daß die Wechselspannungskomponente ausgefiltert wird und daß die übrigbleibende Gleichspannung mit einer von einer Referenzspannungsquelle abgeleiteten Referenzspannung verglichen wird. Der Detektor 130 erkennt die Anwesenheit des Rufstroms und damit indirekt auch die Rufstrompausen. Zu diesem Zweck ist der Ausgang der Pufferstufe 128 mit einem Spitzenwertdetektor 410 verbunden, dessen Ausgang an einen Eingang eines Komparators 412 angeschlossen ist. Die Eingangsspannung des Komparators 412 wird mit einer am anderen Eingang anliegenden Referenzspannung verglichen, die einen Schwellwert für das Vorhandensein eines positiven Stroms vorgibt.

In Fig. 7 ist im wesentlichen eine näher ausgeführte Schaltungsanordnung für den Rufbeantwortungsdetektor 132 gezeigt. Die Pufferstufe 128 ist über Widerstände 500, 502, 504, 506 und 508 vorgespannt und greift eingangsseitig die Spannung am Widerstand 120 ab, wie schon erwähnt wurde. Das über den Widerstand 120 laufende Signal wird mittels eines hochohmigen Widerstands 510 bedämpft und über Widerstände 514 und 516 einem Tiefpaßfilter 512 zugeführt, das mittels dieser Widerstände, einem Widerstand 518 und Kondensatoren 520 und 522 vorgespannt wird.

Ein Tiefpaßfilter 524 ist eingangsseitig mit dem Ausgang der Pufferstufe 128 verbunden und mittels Widerständen 526, 528, 530, 532 und 534 sowie Kondensatoren 536 und 538 vorgespannt. Die Ausgänge der Tiefpaßfilter 512 und 524 sind an den Komparator 412 angeschlossen, dessen Ausgang das Rufabschaltesignal RT an die Leitung 540 abgibt. Der am Ausgang der Pufferstufe 128 auftretende, die Anwesenheit des Rufstroms kennzeichnende Zustand wird auch einer Schaltung 542 mitgeteilt, die ein den aufgelegten Zustand des Handapparats kennzeichnendes Signal und ein den abgehobenen Zustand des Handapparats kennzeichnendes Signal empfängt. Das zuerst genannte Signal ist eine logische 0, während das zweitgenannte Signal eine logische 1 ist.

In Fig. 8 ist die Steuerlogikschaltung 140 dargestellt. Das Rufabschaltesignal RT der Leitung 540 und das Rufanwesenheitssignal RP der Leitung 600 werden über die Gatter 602 bzw. 604 zur Anpassungsschaltung 136 übertragen, wobei Zeitbedingungen durch Flipflopschaltungen 606 und 608 erfüllt werden und das vom Komparator 610 stammende Rechtecksignal der Frequenz 96 kHz miteingeht. Das Rufabschaltesignal RT und das Rufanwesenheitssignal RP werden von der Steuerlogikschaltung 140 über die Leitungen 612 bzw. 614 zur Anpassungsschaltung 136 übertragen. Das Polaritätssteuersignal P für den Treiberverstärker 114 wird von der Anpassungsschaltung 136 auf einer Leitung 618 zu einer NOR-Schaltung 616 gesendet, die an ihrem anderen Eingang ein Multiplexausgangssignal von digitalen Multiplexgattern 620 erhält, die die Rechtecksignale an den Ausgängen fsQ1, fsQ2, fsQ3 und fsQ4 der Rufsignalreferenzspannungsquellen 20 bis 26 an die Leitungen 622 verteilen.

Signale $f_1$, $f_2$, $f_3$, $f_4$ der Rufsignalreferenzspannungsquellen und ein Münzgleichstromsignal C sowie ein Münzrelaissignal CR werden über Gatter an die Leitungen 622 abgegeben, um am unteren Eingang einer UND-Schaltung 424 ein Signal zu erzeugen. Die Anpassungsschaltung 136 sendet von ihrem Vorbereitungsausgang E ein weiteres Steuersignal zu einem anderen Eingang der UND-Schaltung 424. Die Leitungen 622 sind über die Leitung 102 mit dem analogen Multiplexer 100 verbunden. Der Ausgang einer ODER-Schaltung 624 ist mit dem Triggereingang Tr einer eine Zeitkonstante von 2,5 Sekunden aufweisenden Zeitschaltung 142 gekoppelt.

In Fig. 9 ist eine Schaltungsanordnung für die Zeitschaltung 142 dargestellt. Das auf der Leitung 700 vorhandene Steuersignal E gelangt zum Rückstelleingang R und über einen Inverter 704 zum Triggereingang eines Taktgebers 702, der in Abständen von 2,5 Sekunden Ausgangssignale abgibt. Ein anderer Eingang des Inverters 704 ist mit dem Ausgang der ODER-Schaltung 624 verbunden.

In Fig. 10 ist ein Blockschaltbild einer Rufsignalreferenzspannungsquelle 20 dargestellt. Die Fig. 11a, 11b, 11c, 11d und 11e zeigen verschiedene Signalformen, die an kritischen Punkten im Blockschaltbild der Fig. 10 auftreten. Diese Signalformen tragen zum Verständnis der Arbeitsweise der Rufsignalreferenzspannungsquelle bei. Ein Dreieckspannungsgenerator 800 erzeugt an seinem Ausgang 803 eine Spannung $V_1$, die in Fig. 11a gezeigt ist. Diese Spannung wird mittels eines Tiefpaßfilters 802 gefiltert, dessen Ausgangssignal $V_2$ in Fig. 11b gezeigt ist. Das Signal $V_2$ wird mit einem Gleichspannungssignal in der Summierschaltung 804 summiert, so daß ein Summensignal $V_3$ auftritt, das in Fig. 11c gezeigt ist. Das Signal $V_3$ wird einem Doppelweggleichrichter 806 und einem Nullstellendetektor 808 zugeführt. Das Ausgangssignal des Doppelweggleichrichters 806 ist das Signal $fs_1$, das in Fig. 11d gezeigt ist. Das Ausgangssignal des Nullstellendetektors 808 ist fsQ1, das als Spannung $V_5$ in Fig. 11e erscheint.

Fig. 12 zeigt eine ausführliche Schaltungsanordnung für einen Rufoszillator, der aus dem Dreiecksspannungsgenerator 800 und dem Tiefpaßfilter 802 der Fig. 10 zusammengesetzt ist. Operationsverstärker 820 und 822 sind durch Widerstände 832 vorgespannt und erzeugen die Spannung $V_1$, die in Fig. 11a gezeigt ist. Die dort dargestellte Dreiecksspannung hat einen Spitzenwert von 1,81 V. Die Spannung am Ausgang des Operationsverstärkers 820 hat die Form eines Rechtecksignals, dessen Amplitude durch die Sättigung der Operationsverstärker 820 und 822 bestimmt wird. Die Spannung $V_1$ wird im Tiefpaßfilter 802 dem positiven Eingang eines Operationsverstärkers 834 zugeführt, der durch Widerstände 836, 838 und 840 sowie durch Kondensatoren 842 und 844 vorgespannt wird. Das Ausgangssignal des Operationsverstärkers 834 ist die Spannung $V_2$, die als Sinussignal in Fig. 11b gezeigt ist. Der Frequenzabgleich wird durch die Änderung des Widerstandes 826 erreicht, wobei die Güte Q des Filters 802 den Betrag von 1,5873 aufweist und die Mittenfrequenz durch die Werte der Widerstände 830 und 836 bestimmt wird. Die Verstärkung ist 2,373. Diese Werte sind nur als Beispiel angeführt.

In Fig. 13 ist eine Schaltungsanordnung für den Doppelweggleichrichter 806 und den Nullstellendetektor 808 der Fig. 12 gezeigt. Das Sinussignal $V_2$ wird einem Operationsverstärker 846 zugeführt, der durch Widerstände 848, 850, 852 und 854 vorgespannt ist. Die Wechselspannungsamplitude ist mit dem Widerstand 848 einstellbar, während die Gleichspannungsamplitude sich mit dem Widerstand 850 einstellen läßt. Operationsverstärker 856 und 858 sind mit Widerständen 860, 862, 864, 866, 868, 870, 872 und 874 und mit Dioden 876 und 878 gebildet und vorgespannt, um am Ausgang des Verstärkers 858 das Signal $V_4$ mit der in Fig. 11d gezeigten Signalform zu erhalten, die eine einer Gleichvorspannung überlagerte, gleichgerichtete Sinuswelle ist. Der Ausgang des Verstärkers 846 ist mit dem positiven Eingang des Operationsverstärkers 880 gekoppelt, um die Spannung $V_5$ mit der in Fig. 11e gezeigten Rechtecksignalform am Ausgang dieses Operationsverstärkers zu erhalten.

In Fig. 14 ist eine Schaltungsanordnung des in der Fig. 1 gezeigten Gleichspannungsgenerators 27 dargestellt. Diese Schaltungsanordnung leitet die verschiedenen Gleichspannungen ab, die als Vorspannungen für die verschiedenen Komponenten innerhalb des Rufsignalgenerators benötigt werden, und sie enthält Operationsverstärker 900, 902, 904 und 906, die über die Leitung 908 die Entladeschaltung 222 bzw. über die Leitung 910 die Anpassungsschaltung 136 vorspannen bzw. die über die Leitung 912 die Referenzvorspannung für die Münzgleichspannung bzw. über die Leitung 914 die Vorspannung für den Niedrigpegeloszillator zur Verfügung stellen.

## Patentansprüche

1. Schaltungsanordnung zur Erzeugung von Rufsignalen für mehrere, über ein Koppelnetz miteinander verbindbare Fernmeldeleitungen, deren Verbindungszustand leitungsindividuell überwacht wird und die über einen gemeinsamen Rufsignalbus (T, R) mit einem Rufsignalgenerator (106) verbindbar sind, mit einem Prozessor zur Steuerung der Erzeugung der Rufsignale für den Rufsignalbus (T, R), mit mehreren Rufsignalreferenzspannungsquellen (20 bis 26) zur Erzeugung von Wechselspannungen unterschiedlicher Frequenz, die als Rufsignale dem Rufsignalbus zugeführt werden, und mit Zeitvielfacheinspeisung dieser Rufsignale unterschiedlicher Frequenz in den Rufsignalbus, insbesondere für digital arbeitende Fernsprechvermittlungsanlagen, bei denen jede Fernsprechleitung durch eine Anpassungsschaltung abgeschlossen ist, in der eine Umwandlung zwischen den analogen Signalen auf der Fernsprechleitung und den digitalen Signalen im Koppelnetz durchgeführt wird, dadurch gekennzeichnet, daß der Rufsignalgenerator (106) eingangsseitig mit den Rufsignalreferenzspannungsquellen (20 bis 26) verbunden ist, daß ein Leitungsschleifenstrommeßwiderstand (120) jeder Fernmeldeleitung mit einer Rufüberwachungsschaltung (126) verbunden ist, die in Abhängigkeit vom Spannungsabfall am Leitungsschleifenstrommeßwiderstand (120) die Rufüberwachungssignale erzeugt, daß ein Eingang einer Rufsteuerschaltung (138) mit dem Steuerbus (18) vom Prozessor verbunden ist, wodurch die Charakteristik der Rufsteuersignale vom Prozessor steuerbar ist, und daß die Rufsteuerschaltung (138) mit dem Rufsignalgenerator (106) verbunden ist, wobei das Ausgangssignal der Rufsteuerschaltung (138) im Rufsignalgenerator (106) die Verstärkung der erforderlichen Wechselspannungen unterschiedlicher Frequenz (f1 bis f4) und deren taktgerechte Einspeisung in den Rufsignalbus (T, R) steuert.

2. Schaltungsanordnung nach Anspruch 1, dadurch gekennzeichnet, daß der Rufsignalgenerator (106) einen rückgekoppelten Gleichspannungsumsetzer (109, FC) zur Verstärkung der Rufsignale unterschiedlicher Frequenz (f1 bis f4) aufweist und daß dieser Gleichspannungsumsetzer einen mit einem Ferritkern ausgerüsteten Impulstransformator (210) aufweist.

3. Schaltungsanordnung nach Anspruch 1, dadurch gekennzeichnet, daß der Rufsignalgenerator (106) folgende Glieder aufweist:

a) eine Schaltung (103, 105) zum Empfang eines analogen Rufsignals mit niedrigem Pegel,
b) eine Schaltung (114) zum Empfang eines digitalen Kommutierungssignals, das mit der Frequenz des genannten analogen Signals synchronisiert ist,
c) einen Pulsbreitenmodulator (113), der die genannte Wechselspannung in ein Impulssignal umsetzt,
d) einen Gleichspannungsumsetzer (109), der das Impulssignal verstärkt und an seinem Ausgang ein Rufsignal mit hohem Pegel abgibt, und
e) Kommutierungsschalter (112), die durch das digitale Kommutierungssignal gesteuert werden und die das Rufsignal an einen Rufsignalbus (T, R) abgeben.

4. Schaltungsanordnung nach Anspruch 1 oder 2, dadurch gekennzeichnet, daß dem Rufsignalgenerator (106) folgende zusätzliche Schaltungsteile zugeordnet sind:

a) einen analogen Multiplexer (100), der eine Frequenz der Wechselspannungen der Rufsignalreferenzspannungsquelle (20 bis 26) auswählt,
b) einen digitalen Multiplexer (108), der ein mit der ausgewählten Wechselspannung synchronisiertes, digitales Kommutierungssignal auswählt, und
c) Kommutierungsschalter (SW3 bis SW6), die durch das ausgewählte digitale Kommutierungssignal gesteuert werden und die verstärkt ausgewählten Rufwechselspannungen des Rufsignalgenerators (106) auf den Rufsignalbus (T, R) durchschalten.

5. Schaltungsanordnung nach Anspruch 1, dadurch gekennzeichnet, daß im Rufsignalgenerator (106) eine Entladeschaltung (220) vorgesehen ist, die entsprechend einem Fehlersteuersignal, das vom Eingangssignal des Pulsbreitenmodulators (FC) abgeleitet ist, Rufstrom einspeist.

## Claims

1. Circuit arrangement for generating ringing signals for several telecommunication lines interconnectable via a switching network, which lines are individually monitored as regards their connection status and are connectable via a common ringing signal bus (T, R) to a ringing signal generator (106), to a processor for controlling the generating of the ringing signals for the ringing signal bus (T, R), to several ringing signal reference voltage sources (20 to 26) for the generating of a.c. voltages of differing frequencies which are applied as ringing signals to the ringing signal bus, and to time division multiplex feeding of these ringing signals of differing frequencies into the ringing signal bus, especially for digitally operating telephone exchanges in which each telephone line is terminated by a matching circuit in which a conversion between the analog signals on the telephone line and the digital signals in the switching network is carried out, characterised in this, that the ringing signal generator (106) is connected on the input side to the ringing signal reference voltage sources (20 to 26), that a line loop current measuring resistor (120) of each telecommunication line is connected to a ringing monitoring circuit (126) which, as a function of the voltage drop over the line loop current measuring resistor (120), generates the ringing monitoring signals, that an input of a ringing control circuit (138) is connected to the control bus (18) of the processor, enabling the characteristic of the ringing control signals to be controlled by the processor, and that the ringing control circuit (138) is connected to the ringing signal generator (106), the output signal of the ringing control circuit (138) controlling, in the ringing signal generator (106), the amplification of the necessary a. c. voltages of differing frequencies (f1 to f4) and the feeding thereof into the ringing signal bus (T, R) at the correct times.

2. Circuit arrangement according to claim 1, characterised in this, that the ringing signal generator (106) contains a fedback d. c. to d. c. converter (109, FC) for amplifying the ringing signals of differing frequencies (f1 to f4) and that this d. c. converter contains a pulse transformer (210) equipped with a ferrite core.

3. Circuit arrangement according to claim 1, characterised in this, that the ringing signal generator (106) contains the following sections:

a) a circuit (103, 105) for receiving a low-level analog ringing signal,
b) a circuit (114) for receiving a digital commutation signal which is synchronised with the frequency of the said analog signal,
c) a pulse-width modulator (113) which converts the said a. c. voltage into a pulse signal,
d) a d. c. converter (109) which amplifies the pulse signal and emits a high-level ringing signal at its output, and
e) commutation switches (112) which are controlled by the digital commutation signal and pass the ringing signal to a ringing signal bus (T, R).

4. Circuit arrangement according to claim 1 or 2, characterised in this, that the following additional circuit parts are assigned to the ringing signal generator (106):

a) an analog multiplexer (100) which selects a frequency of the a. c. voltages of the ringing signal reference voltage source (20 to 26),
b) a digital multiplexer (108) which selects a digital commutation signal synchronised with the selected a. c. voltage, and
c) commutation switches (SW3 to SW 6) which are controlled by the selected digital commutation signal and which switch through the amplified selected ringing a. c. voltages of the ringing signal generator (106) to the ringing signal bus (T, R).

5. Circuit arrangement according to claim 1, characterised in this, that there is provided in the ringing signal generator (106) a discharge circuit (220) which feeds in ringing current corresponding to an error control signal which is derived from the input signal of the pulse-width modulator (FC).

**Revendications**

1. Agencement de circuits pour produire des signaux d'appel pour plusieurs lignes de télécommunication qui peuvent être reliées entre elles par un réseau de couplage et dont l'état de liaison est contrôlé individuellement pour chacune d'elles, lesdites lignes pouvant être reliées, via un bus de signaux d'appel commun (T, R), à un générateur de signaux d'appel (106), cet agencement comportant: un processeur pour commander la production des signaux d'appel pour le bus de signaux d'appel (T, R); plusieurs sources (20 à 26) de tension de référence de signal d'appel pour produire des tensions alternatives ayant des fréquences différentes et envoyées, en tant que signaux d'appel, au bus de signaux d'appel; et une introduction, par répartition dans le temps de ces signaux d'appel de fréquences différentes, sur le bus de signaux d'appel; notamment pour installations téléphoniques opérant numériquement dans lesquelles chaque ligne téléphonique est terminée par un circuit d'adaptation dans lequel une conversion entre les signaux analogiques présents sur la ligne téléphonique et les signaux numériques présents dans le réseau de couplage est effectuée, caractérisé en ce que le générateur de signaux d'appel (106) est relié, côté entrée, aux sources (20 à 26) de tensions de référence de signaux d'appel, en ce qu'une résistance (120) de mesure de courant de boucle de chaque ligne de télécommunication est reliée à un circuit de contrôle d'appel (126) engendrant les signaux de contrôle d'appel en fonction de la chute de tension dans ladite résistance de mesure de courant de boucle (120), en ce qu'une entrée d'un circuit de commande d'appel (138) est reliée au bus de commande (18) par le processeur, ce qui a pour effet que la caractéristique des signaux d'appel peut être commandée par le processeur, et en ce que le circuit de commande d'appel (138) est relié au générateur de signaux d'appel (106), le signal de sortie du circuit de commande (138) commandant, dans le générateur de signaux d'appel (106), l'amplification des tensions alternatives nécessaires ayant différentes fréquences et leur introduction selon le mode temporel correct dans le bus de signaux d'appel (T, R).

2. Agencement selon la revendication 1, caractérisé en ce que le générateur de signaux d'appel (106) comprend un convertisseur de tension continue à réaction (109, FC) pour amplifier les signaux d'appel de différentes fréquences (f1 à f4), et en ce que ce convertisseur de tension continue comprend un transformateur d'impulsions (210) équipé d'un noyau en ferrite.

3. Agencement selon la revendication 1, caractérisé en ce que le générateur de signaux d'appel (106) comprend les éléments suivants:

a) un circuit (103, 105) pour la réception d'un signal d'appel analogique à faible niveau;
b) un circuit (114) pour la réception d'un signal de commutation numérique qui est synchronisé avec la fréquence du signal analogique mentionné;

c) un modulateur de largeur d'impulsions (113), qui convertit ladite tension alternative en un signal d'impulsions;

d) un convertisseur de tension continue (109) amplifiant le signal d'impulsions et fournissant à sa sortie un signal d'appel à niveau élevé; et

e) des interrupteurs de commutation (112) qui sont commandés par le signal de commutation numérique et qui fournissent le signal d'appel à un bus de signaux d'appel (T, R).

4. Agencement selon la revendication 1 ou 2, caractérisé en ce que les éléments de circuit supplémentaires ci-après mentionnés sont associés au générateur (106) de signaux d'appel:

a) un multiplicateur analogique (100) qui sélectionne une fréquence des tensions alternatives des sources (20 à 26) de tensions de référence de signaux d'appel;

b) un multiplexeur numérique (108) qui sélectionne un signal de commutation numérique synchronisé avec la tension alternative sélectionnée; et

c) des interrupteurs de commutation (SW3 à SW6) qui sont commandés par le signal de commutation numérique sélectionné et qui appliquent, sur le bus de signaux d'appel (T, R) des tensions alternatives d'appel du générateur de signaux d'appel (106) sélectionnées et amplifiées.

5. Agencement selon la revendication 1, caractérisé en ce qu'il est prévu, dans le générateur de signaux d'appel (106) un circuit de décharge (220) qui fournit le courant d'appel en fonction d'un signal de commande d'erreur qui est dérivé du signal d'entrée du modulateur de largeur d'impulsions (FC).

Fig. 1
T
14
R
T
16
R
Adresse
97.52 KHZ
Sägezahn
SS
RS
$f_1$
$f_2$
$f_3$
$f_4$
910
912
908
914

Fig. 2

Vorspg.

92,52 KHz

SS

RS

Für Int.

Ref.-Adresse

Normaler Indikator

Rufrelais

V REF.

FC

T

R

138

908
I
+48 V
210
220
SW5
SW3
222
Vc1
120V
212
206
107
208
214
+
V's
224
Vc2
SW6
SW4
T
106
Vs
120
116
R
122
124
108 UND 114
fRS
202
216
+12V
SW1
Vd
Vd1
Vd2
Vd3
H = +12V
218
204
P
200
L = -12V
-12V
SW2
Fig. 3

206
300
301
302
304
306
308
-3V
V+
-12 V
Fig. 4
128
404
406
408
402
RT
Rs
RL
120
Vr
132
126
410
412
414
RP
130
Fig.6

Fig 5 a
8.49
5.53
0.4
V REF (V's)
t
Fig. 5 b
5V
Vd (Vd1)
Fig. 5 c
1
0
Vd2
Fig. 5 d
+12V
0
-12V
Vd3
SW1-ein
SW2-ein
Fig. 5 e
SW3
aus
ein
Fig. 5 f
SW4
aus
ein
Fig. 5 g
SW5
aus
ein
Fig. 5 h
SW6
aus
ein
Fig. 5 i
Vc1
10V
Fig. 5 J
0
-10V
Vc2
Fig. 5 k
200V
0
Vs
Vorspg.

Fig. 7
Vx
120
500
502
504
506
508
128
510
Vd1
Hi. Z
514
516
520
522
132
512
518
Vd
526
528
538
536
524
530
534
532
542
412
+5V
540
RT

Fig. 8

Fig. 9
+5V
702
Ausgang
704
T
R
142
700
E
624
von 140
Fig. 14
900
908
+1
zur Entladungs-
schaltung
902
910
+1
zu 136
27
904
912
+1
Referenzspg.
für Münzer
906
914
+
-
zum Oszillator
-12V

Fig. 10
Vorspg.
800
803
802
806
V1
V2
V3
V4
V5
804
808
20
Fig. 11 a
V1
1.81
0
-1.81
t
Fig. 11 b
V2
6.81
0
Fig. 11 c
V3
8.49
1.68V
0
VP2
Fig. 11 d
V4
8.49
5.53
0.4
Fig. 11 e
V5
5 V

820
822
824
826
828
830
832
834
836
838
840
842
844
zum Doppelweg-
gleichrichter
800
802
Fig. 12
$V_2$
848
850
852
854
846
860
856
864
876
878
866
806
862
868
870
874
858
872
$V_4$
Vorspg.
880
808
+5V
+5V
$V_5$
Fig. 13